# EUROPÄISCHE PATENTSCHRIFT

(11) **EP 1 255 328 B1**
(45) Veröffentlichungstag und Bekanntmachung des Hinweises auf die Patenterteilung: **23.05.2007**
(21) Anmeldenummer: 02004831.0
(22) Anmeldetag: 02.03.2002
(51) Int. Cl.: H01R 25/14

(54) **Hochvolt-Stromschienensystem**
High-voltage conductor rail system
Système de rails conducteurs à haute tension

(30) Priorität: 02.05.2001 DE 20107459 U
(43) Veröffentlichungstag der Anmeldung: 06.11.2002
(73) Patentinhaber: Oligo Lichttechnik GmbH, 53773 Hennef (DE)
(72) Erfinder: Keferstein, Ralf, 53757 Sankt Augustin (DE)
(74) Vertreter: Selting, Günther

(56) Entgegenhaltungen:
- WO-A-01/09987
- US-A- 3 622 938
- US-A- 5 336 100
- US-A- 6 093 037

## Beschreibung

Die Erfindung betrifft ein Hochvolt-Stromschienensystem mit Profilschienen, welche längslaufende elektrische Leiter enthalten, und mit einem Verbinder zum Verbinden zweier Profilschienen.

Unter einem Hochvolt-Stromschienensytem versteht man ein Stromschienensystem, das mit Netzspannung von beispielsweise 230 V betrieben wird, wobei die Profilschienen eine Stromabnahme an beliebigen Stellen zulassen. Die in den Profilschienen verlaufenden elektrischen Leiter müssen allerdings berührungssicher untergebracht sein, um eine Gefährdung von Personen durch die hohe Spannung zu vermeiden. Der Erdleiter ist mit dem metallisch leitenden Profilgehäuse verbunden. Stromschienensysteme erfordern den Einsatz von Verbindern, mit denen zwei Stromschienen elektrisch und mechanisch verbunden werden können. Üblicherweise sind solche Verbinder als Blöcke ausgebildet, die sich nicht in die Kontur der Profilschienen einfügen und von außen her in die Schlitze der Profilschiene eingreifen, um den elektrischen Leiter zu kontaktieren. Die bekannten Verbindersysteme sind optisch auffällig. Sie unterbrechen das Schienensystem optisch. Ferner können an derartigen Verbindern keine Stromabnehmer (z. B. Strahler) oder Schienenaufhängungen montiert werden.

Bekannte Stromschienensysteme sind z.B. in den Dokumenten US 6 093 037 A und WO 0109987 A offenbart.

Der Erfindung liegt die Aufgabe zugrunde, ein Hochvolt-Stromschienensystem mit Verbindern zu schaffen, bei dem die Stromschienen und die Verbinder klein und unauffällig gestaltet werden können.

Die Lösung dieser Aufgabe erfolgt erfindungsgemäß mit den in dem kennzeichnenden Teil des Anspruchs 1 angegebenen Merkmalen. Hiernach weist der Verbinder Kontaktzungen auf, welche in die Innenteile der Schlitze der Kunststoffprofile der Profilschienen eindringen und die Leiter von der Innenseite her kontaktieren. Durch die von innen gegen die Leiter drückenden Kontaktzungen wird verhindert, dass stromführende Teile seitlich über die Leiter hinaus vorstehen. Das Verbinden der Leiter zweier angrenzender Profilschienen erfolgt durch Verbinder, die von der Innenseite der Profilscheine her gegen die Leiter drücken. Damit wird die üblicherweise von außen her ansetzende Kontaktierungstechnik vermieden, so dass ein eleganter Übergang zwischen Profilschiene und Verbindergehäuse erreicht wird. Ein wesentlicher Vorteil der Erfindung besteht darin, dass das Verbindergehäuse sehr klein gestaltet werden kann. Im Falle des Kontaktierens von außen - wie beim Stand der Technik - führen wegen des Berührungsschutzes einzuhaltende Luft- und Kriechstrecken zu großen Abmessungen des Verbindergehäuses. Bei dem Gegenstand der Erfindung liegen dagegen die Kontaktzungen, bezogen auf den elektrischen Leiter zur Innenseite hin, so dass es außen keine relevanten Luft- und Kriechstrecken gibt. Dies hat zur Folge, dass das Verbindergehäuse im Verhältnis zur Profilschiene klein gestaltet werden kann. Das Verbindergehäuse kann entweder bündig mit den Profilschienen gestaltet sein oder als ein die Profilschiene umfassendes rechteckiges Rohr.

Gemäß einer bevorzugten Weiterbildung der Erfindung ragt jede der Kontaktzungen nach entgegengesetzten Seiten aus dem Verbindergehäuse heraus und wird von einer Feder nach außen gedrückt. Die Kontaktzunge überbrückt somit als einstückiges Kontaktelement den Abstand zwischen den zu verbindenden Leitern.

Gemäß einer bevorzugten Weiterbildung der Erfindung weist das Verbindergehäuse jeweils in einem Schlitz eines Kunststoffprofils einen längslaufenden Dorn auf, der in die Leiter der angrenzenden Stromschienen sticht. Die Dorne sind bündig mit den Leitern der anschließenden Stromschienen angeordnet, so dass sie diese Leiter fortsetzen. Andererseits können an den Dornen, die in den offenen Schlitzen angeordnet sind, Stromabnehmer angreifen. Damit besteht die Möglichkeit, das Verbindergehäuse mit einer Einfassung zu umgeben, so dass die Übergänge zu den Profilschienen vollständig verdeckt sind. Die Einfassung kann einen elektrischen Stromabnehmer enthalten und/oder als mechanischer Schienenträger ausgebildet sein, beispielsweise um die Profilschienen an der Decke aufzuhängen. Wenn die Einfassung als Stromabnehmer ausgebildet ist, kann sie sowohl an den Verbinder als auch an die Profilschienen angesetzt werden, da die Kontaktierungstechnik in beiden Fällen gleich ist. Die Einfassung kann auch in Längsrichtung der Profilschienen verschoben und dabei über das Verbindungsgehäuse hinweggeschoben werden. Stromabnehmer (z. B. Strahler) oder Schienenaufhängungen können an beliebiger Stelle des Systems - also auch am Verbinder (dort sogar nahtüberdeckend) - positioniert werden. Dies hat den entscheidenden Vorteil, dass ein aus mehreren Schienen-Teilstücken und Verbindern bestehendes Gesamtsystem optisch nahtfrei, durch entsprechende Montageanordnung, gestaltet werden kann.

Zur mechanischen Befestigung der angrenzenden Profilschienen an das Verbindergehäuse sind Spreizdübel vorgesehen, die jeweils in einen Längskanal der Profilschiene einsetzbar sind und einen aus dem Ende der Profilschiene vorstehenden Kopf vorweisen, welcher in einem Längskanal des Verbindergehäuses verankerbar ist. Der Spreizdübel wird in üblicher Spreizdübeltechnik in dem Längskanal der Profilschiene verankert. Anschließend wird sein Kopf in einen Längskanal des Verbindergehäuses eingeschoben und dann erfolgt eine Verspannung, wobei vorzugsweise der Spreizdübel zu dem Verbindergehäuse hingezogen wird, so dass die Stromschiene ebenfalls mit Kraft gegen das Verbindergehäuse gezogen wird.

Im Folgenden werden unter Bezugnahme auf die Zeichnungen bevorzugte Ausführungsbeispiele der Erfindung näher erläutert.

### Es zeigen:

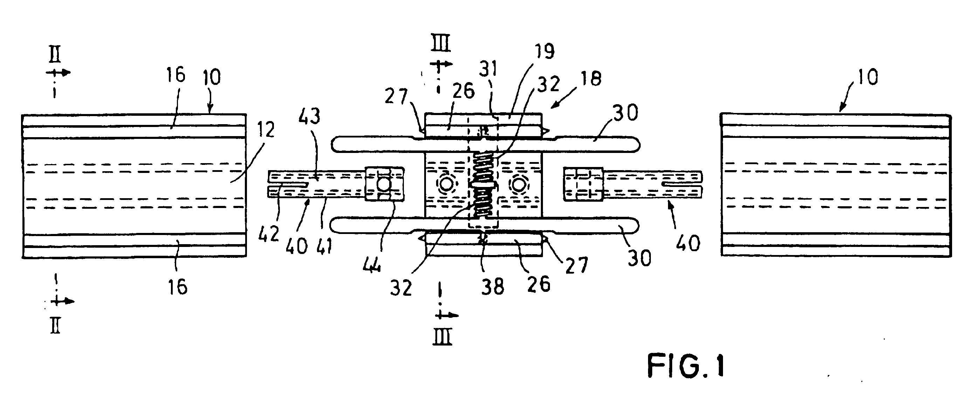

Fig. 1 eine Explosionsdarstellung einer ersten Ausführungsform des Stromschienensystems,
Fig. 2 einen Schnitt durch die Profilschiene entlang der Linie II-II von Fig. 1,
Fig. 3 einen Schnitt durch das Verbindergehäuse entlang der Linie III-III von Fig. 1,
Fig. 4 die Verbindungsstelle des in Fig. 1 dargestellten Systems im montierten Zustand,
Fig. 5 eine vergrößerte Darstellung einer Kontaktzunge,
Fig. 6 eine vergrößerte Darstellung eines Dornes des Verbinders,
Fig. 7 die Verbindungsstelle eines weiteren Ausführungsbeispiels, bei dem das Verbindergehäuse an seinen beiden Enden rohrförmige Ansätze aufweist, welche die jeweilige Profilschiene übergreifen, und
Fig. 8 eine Ansicht des Verbindergehäuses aus Richtung der Pfeile VIII-VIII von Figur 7.

Das Hochvolt-Stromschienensystem weist Stromschienen auf, die als tragenden Bestandteil eine Profilschiene 10 aus Metall haben. Die Profilschiene 10 besteht aus einem länglichen Profilkörper mit nach entgegengesetzten Seiten gerichteten längslaufenden Nuten 11. Zwischen den Nutböden verläuft ein Längskanal 12, der quadratisch ist. Die Profilschiene hat ebene Seitenwände 13 und die Öffnungen der Nuten 11 befinden sich an der Oberseite und an der Unterseite. Die Profilschiene hat ein schlankes, aufrecht stehendes, rechteckiges Außenprofil. In den Nuten 11 der Profilschiene befinden sich U-förmige Kunststoffprofile 14, die jeweils die Nut 11 im Wesentlichen ausfüllen. Jedes Kunststoffprofil 14 weist einen Schlitz 15 auf. Die Schlitze 15 beider Kunststoffprofile liegen in einer gemeinsamen (vertikalen) Ebene. Jeder Schlitz 15 enthält einen in Rastausnehmungen fixierten elektrischen Leiter 16. Der Leiter 16 ist hier ein runder Kupferdraht. Er unterteilt den Schlitz 15 in einen Innenteil 15a und einen nach außen offenen Außenteil 15b. Der Innenteil 15a ist durch das Kunststoffprofil 14 und den Leiter 16 umfangsmäßig geschlossen. Der Außenteil 15b des Schlitzes 15 bildet die Zugangsöffnung, durch die ein Kontaktteil eines (nicht dargestellten) Stromabnehmers mit dem Leiter 16 in Kontakt kommen kann.

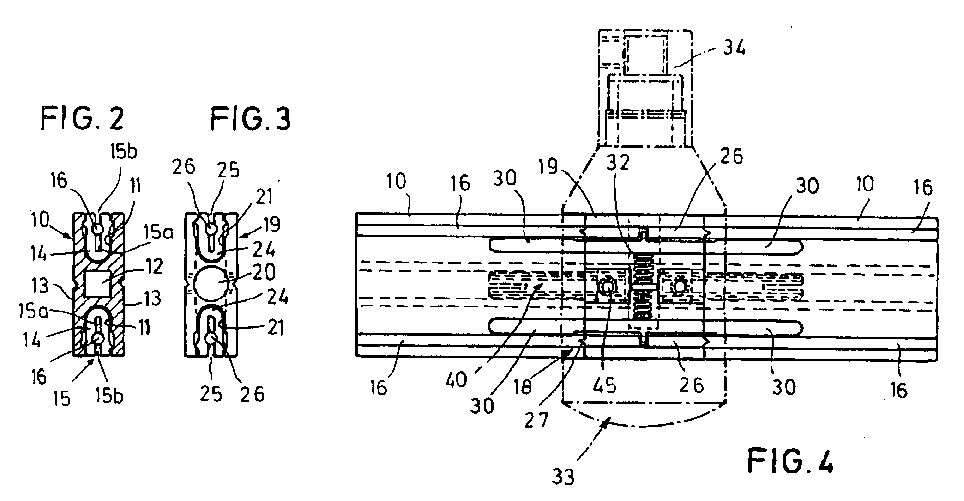

Zum Verbinden zweier Stromschienen dient der Verbinder 18. Dieser weist ein aus Metall bestehendes Verbindergehäuse 19 auf, dessen Profilquerschnitt in Fig. 3 dargestellt ist. Das Verbindergehäuse 19 entspricht dem Profil der Profilschiene 10. Sie besteht aus einem Abschnitt der Profilschiene, wobei lediglich nachträglich der quadratische Längskanal 12 zu einer runden Längsbohrung 20 aufgebohrt ist. Das Verbindergehäuse 19 enthält in entsprechenden Nuten 21, die sich nach entgegengesetzten Seiten öffnen, U-förmige Kunststoffprofile 24, die ebenso ausgebildet sind wie die Kunststoffprofile 14. In den Schlitzen 25 der Kunststoffprofile 24 ist jeweils ein Dorn 26 aus elektrisch leitendem Material angeordnet. Die Dorne 26 überragen die Enden des Verbindergehäuses 19 mit vorstehenden Spitzen 27.

In Längsrichtung des Verbindergehäuses 19 erstrecken sich Kontaktzungen 30 aus elektrisch leitendem flachen Material. Diese Kontaktzungen erstrecken sich durch die Innenteile der Schlitze 25 und sie ragen aus den Enden des Verbindergehäuses 19 heraus. In Querbohrungen 31 des Verbindergehäuses 19 ist jeweils eine Feder 32 angeordnet, die von innen her gegen die Mitte der Kontaktzunge 30 drückt und diese somit nach außen treibt. Auf diese Weise ist die Kontaktzunge 30 nach außen vorgespannt. Die aus dem Verbindergehäuse 19 vorstehenden Teile der Kontaktzungen 30 werden beim Ansetzen der Profilschiene 10 an den Verbinder 18 in die Innenteile 15a der Schlitze 15 eingeführt. Von den Federn 32 werden die Kontaktzungen von innen her gegen die Leiter 16 gedrückt, so dass jede Kontaktzunge 30 eine Kontaktbrücke darstellt, welche die Leiter 16 zweier Stromschienen miteinander verbindet.

Beim Andrücken der Profilschienen 10 an das Verbindergehäuse 19 dringen die Spitzen 27 der Dorne in die Enden der Leiter 16 ein. Dadurch wird eine zusätzliche elektrische Verbindung der Leiter 16 beider Stromschienen bewirkt. Die Dorne 26 können ferner für das Angreifen eines Stromabnehmers durch den Schlitz 25 benutzt werden. In Fig. 4 ist eine das Verbindergehäuse 19 überdeckende Einfassung 33 dargestellt. Diese Einfassung 33 hat eine Länge, die etwas größer ist als diejenige des Verbindergehäuses, so dass die Stoßstellen zu den Profilschienen überdeckt werden. Die Einfassung 33 kann mit einer Halterung 34 zur Befestigung an einer Deckenhalterung versehen sein. In diesem Fall dient die Einfassung 33 als Schienenträger, an dem das Schienensystem aufgehängt ist. Es ist aber auch möglich, die Einfassung 33 mit Stromabnehmern auszubilden, die an den Dornen 26 angreifen und eine an der Einfassung befestigte (nicht dargestellte) Leuchte speisen. Die seitlichen Begrenzungen der Einfassung liegen außerhalb der Nahtstellen zwischen Verbinder 18 und Profilschienen 10, so dass diese Nahtstellen von der Einfassung 33 verdeckt werden.

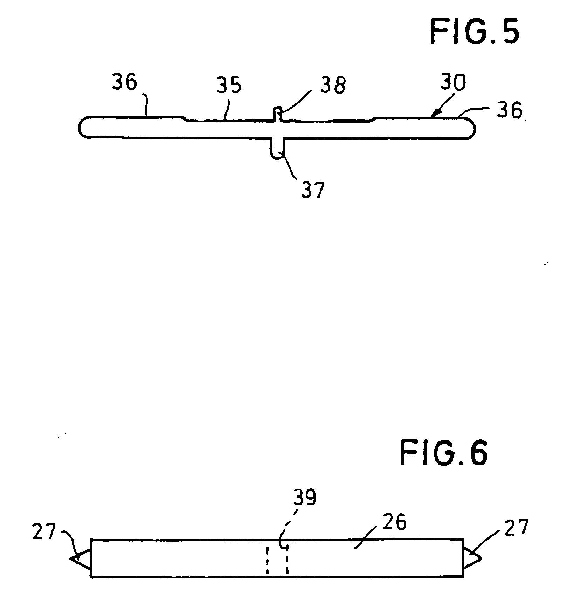

Fig. 5 zeigt in vergrößertem Maßstab eine der Kontaktzungen 30. Die Kontaktzunge 30 hat einen zurückspringenden Mittelbereich 35, der sich durch die Länge des Verbindergehäuses 19 erstreckt, und nach außen vorstehende Endbereiche 36, die in die Schlitze 15 der Profilschiene 10 hineinragen. Der zurückspringende Mittelbereich 35 erlaubt eine ausreichende Querbeweglichkeit der Kontaktzunge unter der Wirkung der Feder 32, so dass die Endbereiche 36 mit Kraft gegen den jeweiligen Leiter 16 gedrückt werden können.

Im Mittelbereich der langgestreckten Kontaktzunge 30 ist ein Zentrierzapfen 37 vorgesehen, der in die Feder 32 hineinragt. Zur entgegengesetzten Seite hin steht ein Zapfen 38 ab, der in eine Querbohrung 39 des Dornes 26 hineinragt.

Zur Erzielung einer hohen mechanischen Stabilität der Verbindung ist ein Spreizdübel 40 vorgesehen. Dieser weist einen rechteckigen Schaft 41 auf, der in den Längskanal 12 der Profilschiene 10 eingeschoben wird und mit einem Längsschnitz 42 versehen ist. Der Spreizdübel 40 enthält eine längslaufende Schraube 43, die festgezogen werden kann, um den Schlitz 42 auseinander zu spreizen und den Schaft im Längskanal 12 zu verspannen.

Der Spreizdübel 40 weist anschließend an den Schaft 41 einen zylindrischen Kopf 44 auf, der in den runden Längskanal 20 des Verbindergehäuses 19 eingeführt werden kann. An diesem Längskanal ist eine Querbohrung 45 vorgesehen, durch die eine Schraube von außen in eine entsprechende Querbohrung des Kopfes eingeschraubt ist. Die Querbohrungen sind so angeordnet, dass beim Festziehen der Schraube der Spreizdübel, der bereits in der Profilschiene 10 festgeklemmt ist, gegen das Verbindergehäuse 19 gezogen wird, so dass die Stromschiene fest gegen das Verbindergehäuse gedrückt und festgehalten wird. Dieses Festziehen kann auch durch eine Exzenterwirkung erfolgen. Danach kann die Einfassung 33 um die Verbindungsstelle herumgelegt werden.

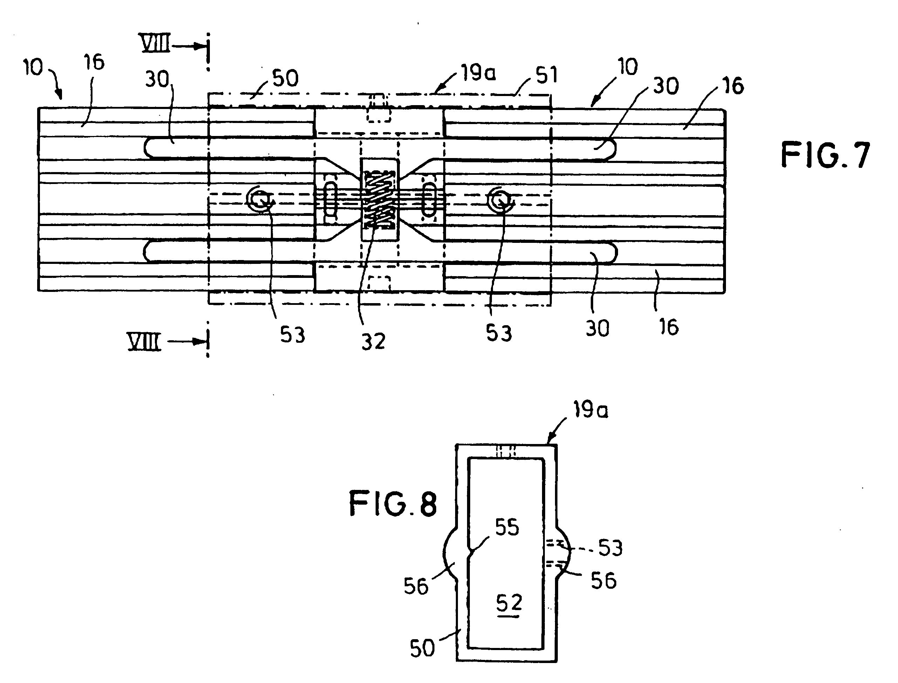

Bei dem Ausführungsbeispiel der Figuren 7 und 8 sind die gleichen Profilschienen 10 vorgesehen wie bei dem ersten Ausführungsbeispiel. Das Verbindergehäuse 19a hat einen Querschnitt, der größer ist als derjenige der Profilschienen und es weist an den einander entgegengesetzten Enden rohrförmige Ansätze 50,51 von generell rechteckigem Querschnitt auf. Die Ansätze sind jeweils zum Ende hin offen und ihr Hohlraum 52 ist der Außenkontur der Profilschiene angepasst, so dass die Profilschienen passend in den jeweiligen Ansatz 50,51 eingeschoben werden können.

Die Kontaktzungen 30 erstrecken sich durch die rechteckigen rohrförmigen Ansätze 50,51 hindurch und stehen über diese hinaus. Sie liegen von innen her an dem jeweiligen Leiter 16 der Stromschiene an.

Dorne 26, die bei dem ersten Ausführungsbeispiel vorhanden sind, sind bei dem zweiten Ausführungsbeispiel nicht vorgesehen. Die rohrförmigen Ansätze haben den Vorteil, dass die Profilschienen 10, die in der Regel erst bei der Montage auf Länge abgeschnitten werden, nicht exakt gerade abgeschnitten sein müssen. Ein Spalt ist auch bei schrägem Abschneiden von außen nicht sichtbar, weil er in dem Verbindergehäuse 19a verschwindet.

Die Ansätze 50,51 sind auf einer Seite jeweils mit einer Querbohrung 53 versehen, in der eine (nicht dargestellte) Klemmschraube sitzt. Die Bohrung 53 ist eine Gewindebohrung und die Klemmschraube drückt mit ihrem Ende gegen die Seite der Profilschiene 10, um diese in dem Verbindergehäuse gegen Herausziehen zu sichern. Daher sind bei diesem Ausführungsbeispiel die Spreizdübel 40 des ersten Beispiels nicht erforderlich. Auf der der Bohrung 53 gegenüberliegenden Seite befindet sich im Inneren des Hohlraums 52 ein längslaufender Vorsprung 55, der in die seitliche Nut der Profilschiene 10 hineinragt und eine exakte Führung der Profilschiene im Ansatz 50,51 sicherstellt. Im Bereich der Bohrungen 53 und des Vorsprungs 55 sind an den Seiten des Verbindergehäuses 19a längslaufende wulstförmige Leisten 56 vorgesehen, um in diesem Bereich die Festigkeit und Steifigkeit zu erhöhen.

Auch bei dem zweiten Ausführungsbeispiel ist zwischen den Kontaktzungen 30 eine Feder 32 vorgesehen, die die Kontaktzungen nach außen drückt und einen hinreichenden Anpressdruck an die Leiter 16 sicherstellt. Jede der beiden Kontaktzungen 30 ist nach Art einer Wippe im Mittelbereich an der Feder 32 abgestützt.

## Patentansprüche

1. Hochvolt-Stromschienensystem mit Profilschienen (10), die längslaufende elektrische Leiter (16) enthalten, welche in Schlitze (15) eines Kunststoffprofils (14) eingesetzt sind, wobei jeder Schlitz (15) einen Innenteil (15a) und einen Außenteil (15b) aufweist, die durch den Leiter (16) getrennt sind, und mit einem Verbinder (18) zum elektrischen und mechanischen Verbinden zweier Profilschienen (10), wobei der Verbinder (18) ein Verbindergehäuse (19;19a) aufweist, aus dem Kontaktzungen (30) vorstehen, **dadurch gekennzeichnet, dass** die Kontaktzungen (30) in die Innenteile (15a) der Schlitze (15) der Kunststoffprofile (14) der anschließenden Profilschienen (10) eindringen und die Leiter (16) von der Innenseite her kontaktieren.

2. Hochvolt-Stromschienensystem nach Anspruch 1, **dadurch gekennzeichnet, dass** jede der Kontaktzungen (30) nach entgegengesetzten Seiten aus dem Verbindergehäuse (19;19a) vorsteht und von einer Feder (32) nach außen gedrückt wird.

3. Hochvolt-Stromschienensystem nach Anspruch 1 oder 2, **dadurch gekennzeichnet, dass** das Verbindergehäuse (19) jeweils in einem Schlitz (25) eines Kunststoffprofils (24) einen längslaufenden Dorn (26) aufweist, der mit den Kontaktzungen (30) in Kontakt steht.

4. Hochvolt-Stromschienensystem nach Anspruch 3, **dadurch gekennzeichnet, dass** der Dorn (26) in die Leiter (16) der angrenzenden Stromschienen sticht.

5. Hochvolt-Stromschienensystem nach den Ansprüchen 2 und 3, **dadurch gekennzeichnet, dass** der Dorn (26) einen Anschlag für eine Kontaktzunge (30) bildet.

6. Hochvolt-Stromschienensystem nach einem der Ansprüche 1 - 5, **dadurch gekennzeichnet, dass** eine das Verbindergehäuse (19) überdeckende Einfassung (33) vorgesehen ist, die als elektrischer Stromabnehmer und/oder als mechanischer Schienenträger ausgebildet ist.

7. Hochvolt-Stromschienensystem nach einem der Ansprüche 1 - 6, **dadurch gekennzeichnet, dass** ein Spreizdübel (40) vorgesehen ist, der in einen Längskanal (12) der Profilschiene (10) einsetzbar ist und einen aus dem Ende der Profilschiene vorstehendem Kopf (44) aufweist, welcher in einem Längskanal (20) des Verbindergehäuses (19) verankerbar ist.

8. Hochvolt-Stromschienensystem nach Anspruch 7, **dadurch gekennzeichnet, dass** zur Verankerung des Kopfes (44) des Spreizdübels (40) eine Schraube vorgesehen ist, die in eine Querbohrung (45) des Verbindergehäuses (19) derart eingeschraubt ist, dass beim Festschrauben der Spreizdübel (40) zu dem Verbindergehäuse (19) gezogen wird.

9. Hochvolt-Stromschienensystem nach Anspruch 1 oder 2, **dadurch gekennzeichnet, dass** das Verbindergehäuse (19a) nach entgegengesetzten Seiten abstehende rohrförmige Ansätze (50,51) aufweist, in die die Enden der Profilschienen (10) passend einführbar sind.

## Claims

1. High-voltage conductor rail system comprising profile rails (10) containing longitudinally extending electric conductors (16) fitted into slots (15) in a plastics profile (14), each slot (15) having an inner portion (15a) and an outer portion (15b) separated by the conductor (16), and comprising a connector (18) for electrically and mechanically connecting two profile rails (10), wherein the connector (18) comprises a connector housing (19; 19a) from which contact tongues (30) protrude, **characterized in that** the contact tongues (30) penetrate into the inner portions (15a) of the slots (15) of the plastics profiles (14) of the adjacent profile rails (10) and contact the conductors (16) from the inside.

2. The high-voltage conductor rail system of claim 1, **characterized in that** each of the contact tongues (30) protrudes to opposite sides from the connector housing (19; 19a) and is urged outward by a spring (32).

3. The high-voltage conductor rail system of claim 1 or 2, **characterized in that** the connector housing (19) has a respective longitudinally extending thorn (26) in a slot (25) of a plastics profile (24), said thorn being in contact with the contact tongues (30).

4. The high-voltage conductor rail system of claim 3, **characterized in that** the thorn (26) pierces into the conductors (16) of the adjacent conductor rails.

5. The high-voltage conductor rail system of one of claims 2 and 3, **characterized in that** the thorn (26) forms a stop for a contact tongue (30).

6. The high-voltage conductor rail system of one of claims 1 - 5, **characterized in that** a bezel (33) covering the connector housing (19) is provided, which is configured as an electric current collector and/or as a mechanic rail support.

7. The high-voltage conductor rail system of one of claims 1-6, **characterized in that** an expansion anchor (40) is provided which is adapted to be fit into a longitudinal channel (12) of the profile rail (10) and has a head (44) protruding from the end of the profile rail, which head is adapted to be anchored in a longitudinal channel (20) of the connector housing (19).

8. The high-voltage conductor rail system of claim 7, **characterized in that** a screw is provided for anchoring the head (44) of the expansion anchor (40), which screw is screwed into a transverse bore (45) of the connector housing (19) such that, upon tightening the screw, the expansion anchor (40) is pulled towards the connector housing (19).

9. The high-voltage conductor rail system of claim 1 or 2, **characterized in that** the connector housing (19a) has tubular tabs (50, 51) projecting to opposite sides, into which the ends of the profile rails (10) may be fittingly inserted.

## Revendications

1. Système de rails conducteurs à haute tension, équipé de rails profilés (10) contenant des conducteurs électriques (16) longitudinaux insérés dans des fentes (15) d'un profilé en matière plastique (14), chaque fente (15) présentant une partie interne (15a) et une partie externe (15b) qui sont séparées par le conducteur (16), et d'un connecteur (18) pour le raccordement électrique et mécanique de deux rails profilés (10), le connecteur (18) présentant un boîtier de connecteur (19 ; 19a) à partir duquel font saillie des lames de contact (30), **caractérisé en ce que** les lames de contact (30) pénètrent dans les parties internes (15a) des fentes (15) des profilés en matière plastique (14) des rails profilés (10) adjacents et mettent en contact les conducteurs (16) à partir du côté intérieur.

2. Système de rails conducteurs à haute tension selon la revendication 1, **caractérisé en ce que** chacune des lames de contact (30) fait saillie du boîtier de connecteur (19 ; 19a) vers des côtés opposés et est comprimée vers l'extérieur par un ressort (32).

3. Système de rails conducteurs à haute tension selon la revendication 1 ou 2, **caractérisé en ce que** le boîtier de connecteur (19) présente, respectivement dans une fente (25) d'un profilé en matière plastique (24), une broche longitudinale (26) venant en contact avec les lames de contact (30).

4. Système de rails conducteurs à haute tension selon la revendication 3, **caractérisé en ce que** la broche (26) s'enfonce dans les conducteurs (16) des rails conducteurs adjacents.

5. Système de rails conducteurs à haute tension selon les revendications 2 et 3, **caractérisé en ce que** la broche (26) forme une butée pour une lame de contact (30).

6. Système de rails conducteurs à haute tension selon l'une des revendications 1 à 5, **caractérisé en ce qu'**est prévue une sertissure (33) recouvrant le boîtier de connecteur (19), et qui est réalisée en tant que collecteur de courant électrique et/ou en tant que guide-barre mécanique.

7. Système de rails conducteurs à haute tension selon l'une des revendications 1 à 6, **caractérisé en ce qu'**est prévue une cheville à expansion (40) apte à être insérée dans un canal longitudinal (12) du rail profilé (10) et qui présente une tête (44) faisant saillie de l'extrémité du rail profilé, laquelle peut être ancrée dans un canal longitudinal (20) du boîtier de connecteur (19).

8. Système de rails conducteurs à haute tension selon la revendication 7, **caractérisé en ce qu'**est prévue, pour l'ancrage de la tête (44) de la cheville à expansion (40), une vis qui est fixée dans un alésage transversal (45) du boîtier de connecteur (19) de façon telle que, lors du serrage de la vis, la cheville à expansion (40) soit tirée vers le boîtier de connecteur (19).

9. Système de rails conducteurs à haute tension selon la revendication 1 ou 2, **caractérisé en ce que** le boîtier de connecteur (19a) présente des épaulements (50, 51) tubulaires partant vers des côtés opposés, et dans lesquels peuvent être introduites en ajustement les extrémités des rails profilés (10).
